# EUROPÄISCHE PATENTANMELDUNG

(11) **EP 3 624 070 A1**
(43) Veröffentlichungstag der Anmeldung: **18.03.2020**
(21) Anmeldenummer: 19194076.6
(22) Anmeldetag: 28.08.2019
(51) Int. Cl.: G07C 5/00, G07C 5/08

(54) **VERFAHREN, COMPUTERPROGRAMME UND VORRICHTUNGEN FÜR EINE NETZWERKKOMPONENTE UND FÜR EIN ENDGERÄT, NETZWERKKOMPONENTE UND ENDGERÄT**

(30) Priorität: 13.09.2018 DE 102018215636
(71) Anmelder: Volkswagen AG, 38440 Wolfsburg (DE)
(72) Erfinder: Prozesky, Arvid, 10115 Berlin (DE); Preuß, Roman, 10405 Berlin (DE); Scherl, Eleonora, 10245 Berlin (DE); Kammerlocher, Mathias, 38114 Braunschweig (DE); Harms, Mirko, 38108 Braunschweig (DE)

(57) **Zusammenfassung**

Ausführungsbeispiele schaffen Verfahren, Computerprogramme und Vorrichtungen für eine Netzwerkkomponente und für ein Endgerät, eine Netzwerkkomponente, ein Endgerät, und ein System. Das Verfahren (10) für eine Netzwerkkomponente (200) zur Bereitstellung von auf Fahrzeugdaten aus einen Fahrzeug (500) basierenden Informationen umfasst ein Empfangen (11) einer Datenanfrage zur Bereitstellung der Informationen von einem Benutzer; ein Überprüfen (12) einer Freigabe zur Datenübermittlung von Fahrzeugdaten durch den Benutzer; ein Senden (13) einer Datenanfrage an zumindest ein Steuergerät des Fahrzeugs (500), wenn die Freigabe durch den Benutzer vorliegt; ein Empfangen (14) der Fahrzeugdaten von dem Fahrzeug (500); und ein Bereitstellen (15) der auf den Fahrzeugdaten aus dem Fahrzeug (500) basierenden Informationen.

## Beschreibung

Die vorliegende Erfindung bezieht sich auf Verfahren, Computerprogramme und Vorrichtungen für eine Netzwerkkomponente und für ein Endgerät, auf eine Netzwerkkomponente, auf ein Endgerät, und ein System, insbesondere aber nicht ausschließlich, auf ein Konzept zur benutzerautorisierten Fahrzeugdatenübermittlung zur Bereitstellung von darauf aufbauenden Informationen und Diensten.

Fahrzeuge liefern heutzutage vielerlei Daten, die von internen Steuergeräten, auch ECUs (von Electronic Control Unit, Elektronische Kontrolleinheit), ausgewertet oder verarbeitet werden. Beispielsweise werden Fahrzeuge mit Diagnoseschnittstellen ausgerüstet, um Werkstätten Zugriff auf erfasste Daten zu ermöglichen.

Im Werkstattbetrieb werden Diagnose-Tester eingesetzt, um Fehler im Fahrzeug zu identifizieren und die korrekten Reparaturmaßnahmen zu ermitteln. Diagnosedaten werden ebenfalls in der Entwicklung oder der Produktion von Fahrzeugen genutzt, um den Zustand von Steuergeräten zu bestimmen. Dazu wird z.B. die OBD-Schnittstelle (OnBoard-Diagnose) bzw. der zugehörige OBD-Standard, vgl. ISO-Norm 22901, verwendet. Im Privatkundenbereich existiert eine hohe Anzahl von OBD-II Dongles, die ebenfalls Diagnosedaten aus dem Fahrzeug und diese für den Endkunden zur Anzeige bringen. Es existieren auch sogenannte "Viewer" welche bestimmte Diagnosedaten innerhalb von ODX Daten (nach ISO-Norm 22901 normierte Daten) suchen und zur Anzeige bringen können. ODX (Open Diagnostic Data Exchange, ODX-Standard (ASAM MCD-2D)) ist eine formale Beschreibungssprache. Diese dient zur Fahrzeug- oder Steuergerätediagnose und ermöglicht einen standardisierten Datenaustausch. Dabei wird zumeist ein Anzeigegerät, wie beispielsweise ein Computer, mit der OBD-Schnittstelle des Fahrzeugs verbunden. Im Werkstattbetrieb, der Entwicklung oder der Produktion werden die zuvor beschrieben Messwertkampagnen im Allgemeinen manuell aus ODX-Daten erstellt und in einem Skript hinterlegt, welches die benötigen Daten in der gewünschten Reihenfolge ausliest.

Das Dokument DE 10 2016 215 068 A1 beschreibt ein Konzept zur Verwendung einer Wartungssoftware für ein Fahrzeug, die zur Aktualisierung von Software im System eines Fahrzeugs verwendet werden kann. Eine Zugriffsmöglichkeit für die Wartungssoftware auf diverse Systemkomponenten ist dabei die OBD-Schnittstelle. Die Druckschrift 10 2015 204 863 A1 beschäftigt sich ebenfalls mit Steuergerät-Softwareupdates von Fahrzeugen und schlägt als Variante die Verwendung der OBD-Schnittstelle vor. Das Dokument DE 10 2007 050 994 A1 beschreibt eine Kombination der OBD-Schnittstelle mit RFID (Radio Frequency Identification, Funkfrequenzidentifikation) zum Austausch von Informationen und zur Identifikation passender Ersatzteile. Die Druckschriften DE 10 2011 014 557 A1 und DE 10 2011 008 211 A1 beschreiben Konzepte zur statistischen Auswertung von erfassten Fahrzeugdaten und Fehlercodes, um basierend auf erfassten Daten und einer Datenhistorie/-statistik Fehlerprognosen zu erstellen. Die aus dem Stand der Technik bekannten Möglichkeiten zur Erfassung und Auswertung der Fahrzeugdaten sind begrenzt.

Dokument US2010/0256861 A1 beschreibt ein Konzept zur Überwachung eines Fahrzeugzustands über ein Computersystem. Dazu werden aus dem Fahrzeug Diagnosedaten ausgewertet und ein Mobiltelefon kann per Textnachricht ggf. informiert werden, wenn gewisse kritische Zustände detektiert werden. Das Dokument US 2016/0110929 A1 beschäftigt sich mit dem Auslesen von Telemetriedaten eines Fahrzeugs über eine Telemetrie-Einheit.

Es besteht daher ein Bedarf an einem verbesserten Konzept zur Nutzung von Fahrzeugdaten zu schaffen.

Diesen Bedarf werden Verfahren, Computerprogramme und Vorrichtungen für eine Netzwerkkomponente und für ein Endgerät, eine Netzwerkkomponente, ein Endgerät, und ein System gemäß den anhängigen unabhängigen Ansprüchen gerecht. Vorteilhafte Ausgestaltungen und Weiterbildungen sind Gegenstand der abhängigen Ansprüche.

Ausführungsbeispiele der vorliegenden Erfindung basieren auf dem Kerngedanken, dass die Fahrzeugdaten weiter erfasst und ausgewertet werden können, so dass sich Möglichkeiten neuer Dienste ergeben. Beispielsweise können einem Benutzer digitale Dienste angeboten werden, die auf der Auswertung von Fahrzeugdaten beruhen. Es ist ein weiterer Kerngedanke das fahrzeugbezogene Kundendaten eine wesentliche Grundlage für solche Dienste bilden können. So lassen sich basierend auf diesen Diensten einem Benutzer zusätzlich Informationen bereitstellen (z.B. Sensordaten aus dem Fahrzeug) und die Fahrzeuge können so auch als verteiltes Sensornetzwerk genutzt werden, beispielsweise von Wetterdiensten zur flächigen Erfassung von Temperatur, Druck und Luftfeuchtigkeitsdaten. Ausführungsbeispiele basieren ferner auf der Erkenntnis, dass eine Möglichkeit, um an solche Daten zu kommen, mittels OBDII-Dongles besteht, welche über die OBDII-Schnittstelle durch Diagnose-Anfragen an Steuergeräte im Fahrzeug Daten aus dem Fahrzeug auslesen können.

Ein Verfahren für eine Netzwerkkomponente zur Bereitstellung von auf Fahrzeugdaten aus einen Fahrzeug basierenden Informationen umfasst in einem Ausführungsbeispiel ein Empfangen einer Datenanfrage zur Bereitstellung der Informationen von einem Benutzer sowie ein Überprüfen einer Freigabe zur Datenübermittlung von Fahrzeugdaten durch den Benutzer. Das Verfahren umfasst ferner ein Senden einer Datenanfrage an zumindest ein Steuergerät des Fahrzeugs, wenn die Freigabe durch den Benutzer vorliegt und ein Empfangen der Fahrzeugdaten von dem Fahrzeug. Das Verfahren umfasst ferner ein Bereitstellen der auf den Fahrzeugdaten aus dem Fahrzeug basierenden Informationen. Ausführungsbeispiele erlauben so unter Kontrolle eines Benutzers und der Netzwerkkomponente Fahrzeugdaten zu übertragen, auszuwerten und darauf basierende Dienste zu ermöglichen.

Das Übermitteln der Datenanfrage an das zumindest eine Steuergerät des Fahrzeugs kann zumindest in einigen Ausführungsbeispielen über eine Diagnoseschnittstelle, z.B. die OBD-Schnittstelle, des Fahrzeugs erfolgen. Dadurch kann ermöglicht werden, dass ein oder mehrere Steuergeräte eines Fahrzeugs über eine standardisierte Schnittstelle ansprechbar sind.

Beispielsweise kann das Senden der Datenanfrage an das zumindest eine Steuergerät des Fahrzeugs an ein Endgerät des Benutzers und vom Endgerät des Benutzers an das Fahrzeug erfolgen. Dabei kann das Endgerät des Benutzers als Benutzerstelle und Vermittlungseinheit oder Relaisstation dienen. Das Endgerät des Benutzers kann z.B. zur Einholung von Freigaben zur Übermittlung der Fahrzeugdaten verwendet werden.

In weiteren Ausführungsbeispielen kann das Verfahren ein Autorisieren eines Endgerätes des Benutzers umfassen. Damit kann gewährleistet werden, dass nur bestimmte Endgeräte in den Datenübermittlungsprozess bzw. die Bereitstellung der Information involviert sein dürfen und die Sicherheit des System und damit der Fahrzeug- und Benutzerdaten weiter erhöht werden kann.

Ein Erstellen der Datenanfrage basierend auf einer Kennung des zumindest einen Steuergerätes und einer Zugangsschnittstelle des Fahrzeugs kann in weiteren Ausführungsbeispielen dazu führen, dass die Kenntnis um die konkreten Befehle zum Auslesen der Fahrzeugdaten aus dem Fahrzeug bei der Netzwerkkomponente gehalten werden kann. Beispielsweise kann diese in Kenntnis der Adressierung der Steuergerte und des Befehlssatzes die Instruktionen entsprechen vorbereiten und geschützt übermitteln, so dass diese Information im Netz geschützt vorgehalten werden kann.

In einigen weiteren Ausführungsbeispielen kann die Datenanfrage Informationen über eine Instruktion oder einen Eingangsparameter für eine Tabelle mit verschiedenen Instruktionen an das zumindest eine Steuergerät umfassen. Hierbei kann beispielsweise an der Diagnoseschnittstelle ein Umsetzer, auch Dongle, vorgesehen sein, der bestimmte Befehlsfolgen und damit Prozeduren, Funktionen oder Methoden über die Tabelle abrufen kann. Von außen muss dann nur noch eine entsprechende Adressierung in der Tabelle erfolgen, beispielsweise ein oder mehrere Kennungen für die Tabelleneinträge übermittelt werden.

Ein Abfragen vorhandener Steuergeräte in dem Fahrzeug kann in manchen Ausführungsbeispielen erfolgen. Das Verfahren kann so der Netzwerkkomponente erlauben, sich einen Überblick über die vorhandenen Steuergeräte zu verschaffen und daraus auf die vorhandenen Daten, Adressierungsmöglichkeiten und Funktionen der einzelnen Steuergeräte zu bestimmen, um diese ggf. nutzerspezifisch oder dienstspezifisch zu verwenden. Ausführungsbeispiele können so auf verschiedene Kombinationen von Steuergeräten anpassbar sein.

Ausführungsbeispiele schaffen auch ein Verfahren für ein Endgerät eines Benutzers zur Übermittlung von auf Fahrzeugdaten aus einem Fahrzeug basierenden Informationen. Das Verfahren umfasst ein Erhalten einer Dienstanfrage durch den Benutzer, wobei ein mit der Dienstanfrage angefragter Dienst auf den Fahrzeugdaten basiert, und ein Senden der Dienstanfrage an eine Netzwerkkomponente. Das Verfahren umfasst darüber hinaus ein Freigeben einer Datenübermittlung der Fahrzeugdaten von dem Fahrzeug an die Netzwerkkomponente und ein Erhalten der auf den Fahrzeugdaten basierenden Information von der Netzwerkkomponente. Ausführungsbeispiele können so die Information auf einem Endgerät deines Benutzers nutzbar machen.

Ein Erhalten einer Anfrage nach den Fahrzeugdaten von der Netzwerkkomponente kann in manchen Ausführungsbeispielen vor einem Senden der Anfrage an zumindest ein Steuergerät des Fahrzeugs erfolgen. Das Endgerät des Benutzers kann somit zwischen die Fahrzeugschnittstelle und die Netzkomponente als Relaisstation oder Vermittlung gebracht werden, wodurch die bereits oben beschriebenen Vorteile realisiert werden können, wie z.B. unmittelbare Benutzerfreigaben.

In umgekehrter Richtung kann das Verfahren ein Erhalten der Fahrzeugdaten von dem zumindest einen Steuergerät des Fahrzeugs umfassen und ein Senden der Fahrzeugdaten an die Netzwerkkomponente. Auch kann somit eine Freigabe durch den Benutzer am eigenen Endgerät erfolgen, bevor die Daten an die Netzwerkkomponente übermittelt werden.

In manchen Ausführungsbeispielen kann das Verfahren ein Registrieren für den angefragten Dienst umfassen, so dass der Nutzerkreis auf registrierte Nutzern und/oder registrierte Endgeräte eingeschränkt werden kann, was die Datensicherheit und den Datenschutz für die Fahrzeugdaten verbessern kann.

Das Verfahren kann auch ein erstes Freigeben zur Übermittlung der Fahrzeugdaten bei dem Registrieren umfassen und darüber hinaus noch ein zweites Freigeben zur Übermittlung der Fahrzeugdaten bei der Dienstanfrage. Die Sicherheit kann zumindest in einigen Ausführungsbeispielen so weiter erhöht werden.

Ein weiteres Ausführungsbeispiel ist ein Computerprogramm zur Durchführung eines der hierin beschriebenen Verfahren, wenn das Computerprogramm auf einem Computer, einem Prozessor, oder einer programmierbaren Hardwarekomponente abläuft. Ausführungsbeispiele schaffen darüber hinaus eine Vorrichtung für eine Netzwerkkomponente und/oder eine Vorrichtung für ein Endgerät eines Benutzers, die jeweils ausgebildet sind, um eines der hierin beschriebenen Verfahren durchzuführen. Eine Netzwerkkomponente mit einer entsprechend ausgebildeten Vorrichtung und/oder ein Endgerät mit einer entsprechend ausgebildeten Vorrichtung sind weitere Ausführungsbeispiele.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Flussdiagramm eines Ausführungsbeispiels eines Verfahrens für eine Netzwerkkomponente;
Fig. 2 ein Flussdiagramm eines Ausführungsbeispiels eines Verfahrens für ein Endgerät eines Benutzers;
Fig. 3 Ausführungsbeispiele von Vorrichtungen zur Durchführung der Verfahren für eine Netzwerkkomponente und ein Endgerät eines Benutzers sowie ein Ausführungsbeispiel eines Systems;
Fig. 4 eine Konzeptübersicht zu ODX-Daten in einem Ausführungsbeispiel;
Fig. 5 das Prinzip einer Abbildungstabelle in einem Ausführungsbeispiel;
Fig. 6 eine schematische Darstellung eines "PDU"-Modus in einem Ausführungsbeispiel;
Fig. 7 eine Darstellung der über den "PDU"-Modus auslesbaren Informationen von einem Fahrzeug;
Fig. 8 eine Übersicht zu einem Zusammenspiel von DataPlug, App und Backend beim "PDU"-Modus in einem Ausführungsbeispiel;
Fig. 9 eine Übersicht eines Ablaufs bei einer Funktionsüberprüfung eines Fahrzeugs in einem Ausführungsbeispiel;
Fig. 10 einen Diagnoseteil in einem Backend in einem Ausführungsbeispiel; und
Fig. 11 eine Netzarchitektur inklusive Zustimmungseinholung vom Benutzer in einem weiteren Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. Optionale Merkmale oder Komponenten sind dabei in gestrichelten Linien dargestellt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Ausführungsbeispiele stellen ein Konzept bereit, bei dem nutzerspezifische Dienste basierend auf Fahrzeugdaten aus einem Fahrzeug angeboten werden können. Dabei können die Fahrzeugdaten von dem Fahrzeug (bzw. von einem Steuergerät des Fahrzeugs) an eine Netzwerkkomponente und unter einer Freigabekontrolle des Benutzers weitergeleitet werden. Die Kontrolle des Benutzers kann dabei über ein Endgerät des Benutzers bewerkstelligt werden, beispielsweise mit einem Mobilfunkgerät, einem Tablet oder einem (mobilen) Computer. In Ausführungsbeispielen kann die Netzwerkkomponente beispielsweise ein oder mehreren Computern, Servern, Basisstationen etc. entsprechen.

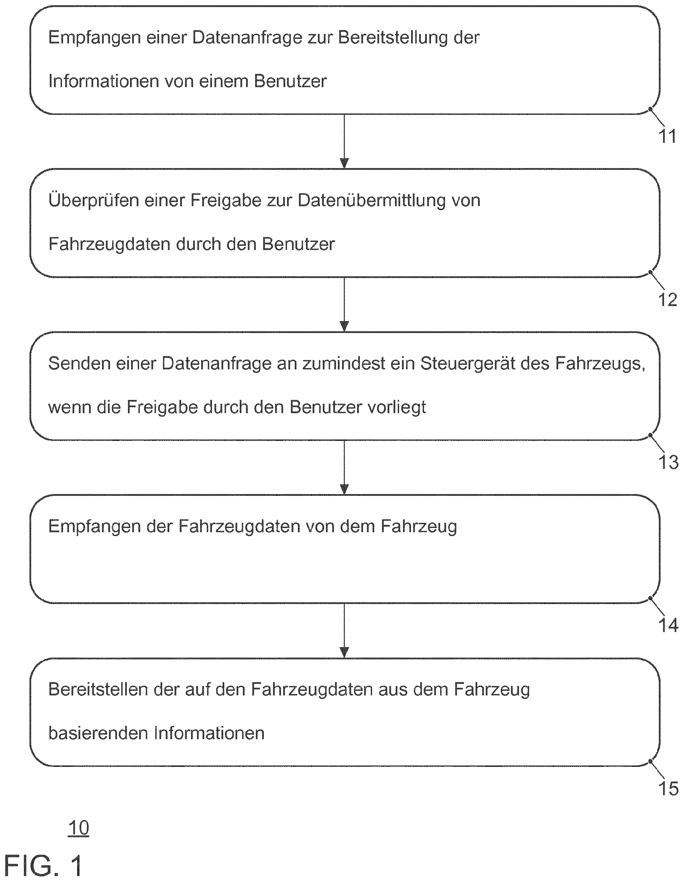

Fig. 1 illustriert ein Flussdiagramm eines Ausführungsbeispiels eines Verfahrens 10 für eine Netzwerkkomponente zur Bereitstellung von auf Fahrzeugdaten aus einen Fahrzeug basierenden Informationen. Das Verfahren 10 umfasst ein Empfangen 11 einer Datenanfrage zur Bereitstellung der Informationen von einem Benutzer. Darüber hinaus umfasst das Verfahren ein Überprüfen 12 einer Freigabe zur Datenübermittlung von Fahrzeugdaten durch den Benutzer. Das Verfahren umfasst darüber hinaus ein Senden 13 einer Datenanfrage an zumindest ein Steuergerät des Fahrzeugs, wenn die Freigabe durch den Benutzer vorliegt. Das Verfahren umfasst weiterhin ein Empfangen 14 der Fahrzeugdaten von dem Fahrzeug und ein Bereitstellen 15 der auf den Fahrzeugdaten aus dem Fahrzeug 500 basierenden Informationen.

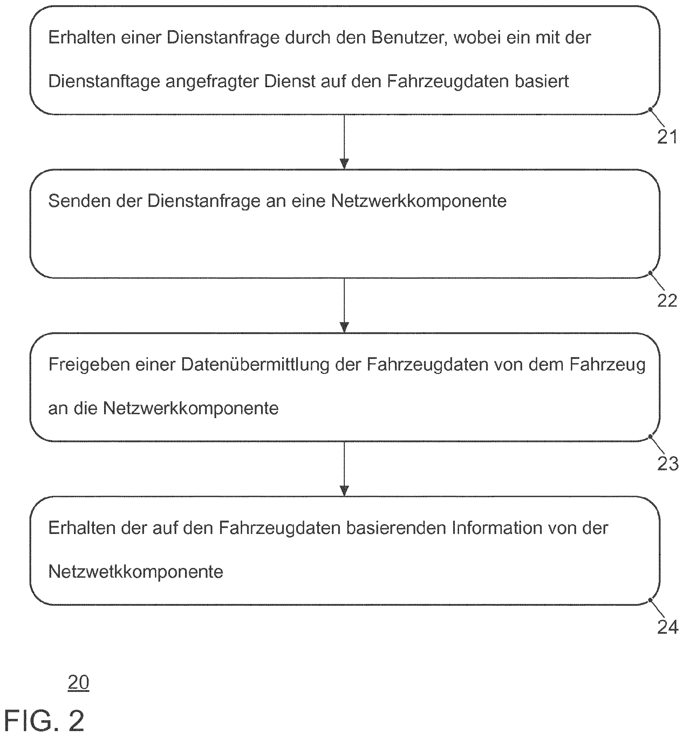

Fig. 2 illustriert ein Flussdiagramm eines Ausführungsbeispiels eines Verfahrens 20 für ein Endgerät eines Benutzers zur Übermittlung von auf Fahrzeugdaten aus einem Fahrzeug basierenden Informationen. Das Verfahren umfasst ein Erhalten 21 einer Dienstanfrage durch den Benutzer, wobei ein mit der Dienstanfrage angefragter Dienst auf den Fahrzeugdaten basiert. Das Verfahren umfasst ferner ein Senden 22 der Dienstanfrage an eine Netzwerkkomponente sowie ein Freigeben 23 einer Datenübermittlung der Fahrzeugdaten von dem Fahrzeug an die Netzwerkkomponente. Das Verfahren umfasst ein Erhalten 24 der auf den Fahrzeugdaten basierenden Information von der Netzwerkkomponente.

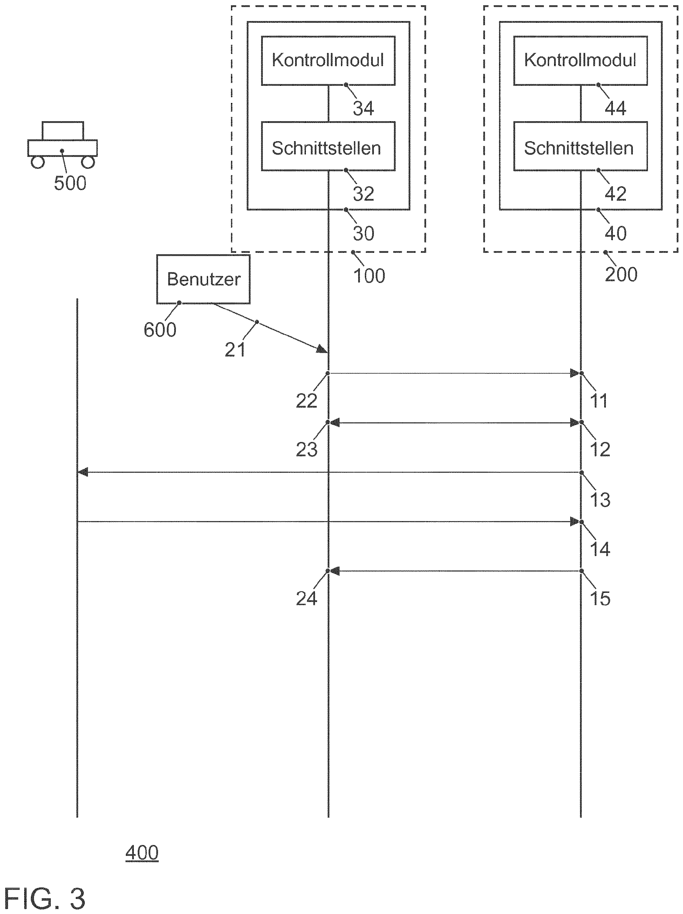

Fig. 3 zeigt Ausführungsbeispiele von Vorrichtungen 30, 40 zur Durchführung der Verfahren 10, 20 für eine Netzwerkkomponente 100 und ein Endgerät 200 eines Benutzers 600 sowie ein Ausführungsbeispiel eines Systems 400. Fig. 3 zeigt von links nach rechts Ausführungsbeispiele für ein Fahrzeug 500, einen Benutzer 600, eine Vorrichtung 30 für ein Endgerät 100 und eine Vorrichtung 40 für eine Netzwerkkomponente 200. Die Vorrichtungen 30, 40 umfassen jeweils ein Kontrollmodul 34, 44, um die oben beschriebenen Verfahrensschritte zumindest teilweise durchzuführen.

Ein solches Kontrollmodul 34, 44 kann in Ausführungsbeispielen beispielsweise einem oder mehreren beliebigen Controllern oder Prozessoren oder einer programmierbaren Hardwarekomponente entsprechen. Beispielsweise kann eine Vorrichtung 30, 40 auch als Software realisiert sein, die für eine entsprechende Hardwarekomponente programmiert ist. Insofern kann ein Kontrollmodul 34, 44 als programmierbare Hardware mit entsprechend angepasster Software implementiert sein. Dabei können beliebige Prozessoren, wie Digitale Signal Prozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren oder Mikrokontroller zur Implementierung der Vorrichtungen denkbar. Es sind auch Implementierungen in integrierter Form mit anderen Kontrolleinheiten denkbar, beispielsweise in einer Kontrolleinheit für ein Fahrzeug, ein Benutzer-Endgerät, ein Server, die zusätzlich noch ein oder mehrere andere Funktionen umfassen können.

Die hierin beschriebenen Verfahrensschritte können in Ausführungsbeispielen durch Vorrichtungen 30, 40 mit jeweiligen ein oder mehreren Schnittstellen 32, 42 ausgeführt werden. Wie die Fig. 3 zeigt, sind die Kontrollmodule 34, 44 jeweils mit den ein oder mehreren Schnittstellen 32, 42 gekoppelt. Die Kontrollmodule 34, 44 sind zur Kontrolle der Schnittstellen 32, 42 ausgebildet. Die ein oder mehreren Schnittstellen 32, 42 können beispielsweise einem oder mehreren Eingängen oder Ausgängen zum Empfangen oder Bereitstellen von Informationen oder Signalen entsprechen, etwa in digitalen Bitwerten, Nachrichten, Protokollen, Spannungen, Stromstärken oder elektromagnetischen Wellen, beispielsweise basierend auf einem Code, innerhalb eines Moduls, zwischen Modulen, oder zwischen Modulen verschiedener Entitäten. Insofern eignen sich die ein oder mehreren Schnittstellen 32, 42 um Signale oder Information mit dem Benutzer 600, dem Fahrzeug 500 und der Netzwerkkomponente 200 auszutauschen. Dabei können die ein oder mehreren Schnittstellen 32, 42 noch weitere Komponenten umfassen, z.B. Ein- und Ausgabegeräte zur Interaktion mit dem Benutzer, Mittel zur drahtlosen Kommunikation, Mittel zur drahtgebundenen Kommunikation, ein oder mehrere Verstärker, Filter, Diplexer, Duplexer, Mischer, Phasenschieber, rauscharme Verstärker (auch engl. Low Noise Amplifier (LNA)), Stecker, Buchsen etc.

Die Fig. 3 zeigt darüber hinaus ein Ausführungsbeispiel eines Verfahrens für ein System 400, wie es dort dargestellt ist. Wie anhand der Fig. 2 erläutert umfasst das Verfahren 20 für das Endgerät 100 des Benutzers 600 zur Übermittlung von auf Fahrzeugdaten aus einem Fahrzeug 500 basierenden Informationen ein Erhalten 21 einer Dienstanfrage durch den Benutzer 600, wobei ein mit der Dienstanfrage angefragter Dienst auf den Fahrzeugdaten basiert. Es folgt in diesem Ausführungsbeispiel ein Senden 22 der Dienstanfrage an die Netzwerkkomponente 200, was aus Sicht der Netzwerkkomponente 200 dem Empfangen 11 der Datenanfrage zur Bereitstellung der Informationen von einem Benutzer 600 entspricht. Daraufhin findet ein Überprüfen 12 einer Freigabe zur Datenübermittlung von Fahrzeugdaten durch den Benutzer, bzw. über das Endgerät 100 des Benutzers, statt, was auf der Endgeräteseite dem Freigeben 23 der Datenübermittlung der Fahrzeugdaten von dem Fahrzeug 500 an die Netzwerkkomponente 200 entspricht. Aus Sicht der Netzwerkkomponente 200 findet dann ein Senden 13 einer Datenanfrage an zumindest ein Steuergerät des Fahrzeugs 500 statt, wenn die Freigabe durch den Benutzer vorliegt. Dies kann indirekt über das Endgerät 100 erfolgen. Die Fahrzeugdaten von dem Fahrzeug 500 werden dann an der Netzwerkkomponente 200 empfangen 14. Auch dies kann wieder indirekt über das Endgerät 100 erfolgen. Schließlich kann ein Bereitstellen 15 der auf den Fahrzeugdaten aus dem Fahrzeug 500 basierenden Informationen erfolgen was aus der Sicht des Endgerätes100 einem Erhalten der 24 auf den Fahrzeugdaten basierenden Information von der Netzwerkkomponente 200 entspricht.

Wie die Fig. 3 zeigt, kann in Ausführungsbeispielen aus Sicht des Endgerätes 100 das Verfahren 20 ein Erhalten einer Anfrage nach den Fahrzeugdaten von der Netzwerkkomponente 200 und ein Senden der Anfrage an zumindest ein Steuergerät des Fahrzeugs 500 umfassen. Darüber hinaus kann ein Erhalten der Fahrzeugdaten von dem zumindest einen Steuergerät des Fahrzeugs 500 und Senden der Fahrzeugdaten an die Netzwerkkomponente 200 umfasst sein.

Die Kommunikation zwischen dem Endgerät 100 und der Netzwerkkomponente 200 sowie zwischen dem Endgerät 100 und dem Fahrzeug 500 kann dabei schnurlos erfolgen. Beispielsweise kommen für die Kommunikation zwischen dem Endgerät 100 und der Netzwerkkomponente 200 Mobilfunknetzwerke in Frage, wie zellularer Mobilfunk verschiedener Generationen, der entsprechende Datenkommunikation erlaubt. Ein weiteres Beispiel wäre WLAN (von Wireless Local Area Network) das z.B. in der heimischen Garage oder an öffentlichen Orten eine Kommunikation mit der Netzwerkkomponente 200 ermöglichen kann. In weiteren Ausführungsbeispielen ist aber auch schnurgebundene Kommunikation denkbar, beispielsweise wenn das Endgerät 100 als Computer implementiert ist und ein Benutzer 600 von heimischen PC (von Personal Computer) aus eine Anfrage an die Netzwerkkomponente 200 stellt. Die Kommunikation zwischen Endgerät 100 und Fahrzeug 500 kann ebenfalls schnurlos oder schnurgebunden erfolgen. Ein Beispiel ist eine Kommunikation über Nahfeldfunkschnittstellen wie RFID oder Bluetooth, die dann über eine Diagnoseschnittstelle des Fahrzeugs 500 mit den ein oder mehreren Steuergräten des Fahrzeugs kommunizieren kann. Das Senden 13 der Datenanfrage an das zumindest eine Steuergerät des Fahrzeugs 500 kann demnach über eine Diagnoseschnittstelle des Fahrzeugs 500 erfolgen.

Eine große Herausforderung kann hierbei in der Bestimmung der richtigen Diagnose-Anfragen, welche an das Fahrzeug 500 gesendet werden, um die gewünschten Daten auszulesen, bestehen. Eine Gruppe von Diagnose-Anfragen wird im Folgenden auch als Messwertkampagne bezeichnet. Eine solche Messwertkampagne kann vom jeweiligen Verbauszustand der Steuergeräte im Fahrzeug 500 abhängen. Die entsprechenden Diagnoseanfragen können beispielsweise in normierten ODX-Daten (Format ist festgelegt in ISO-Norm 22901) hinterlegt sein. Aufgrund der hohen Vielzahl an Steuergeräte-Varianten kann die Ermittlung von individuellen Messwertkampagnen aus diesen Daten eine Herausforderung darstellen.

Neben der Abhängigkeit von den verschiedenen Steuergeräte-Varianten, wird eine solche Messwertkampagne schon aus datenschutzrechtlichen Gründen in einigen Ausführungsbeispielen zusätzlich mit den kundenspezifischen Wünschen abgeglichen. Die Messwertkampagne kann beispielsweise nur Messwerte enthalten, welche zuvor durch den Kunden bestätigt wurden (Consent (Einverständnis) entsprechend der Datenschutzgrundverordnung vom 27.04. 2016). In Ausführungsbeispielen kann daher ferner ein Autorisieren eines Endgerätes 100 des Benutzers 600 erfolgen. Durch die Consent-basierte Erstellung von Messwert-Kampagnen kann in Ausführungsbeispielen die Möglichkeit geschaffen werden, dem Kunden je nach Wunsch unterschiedliche Services anzubieten, welche unterschiedliche Messwerte erfordern. Für einen Kunden der Service x und Service y nutzen möchte, wird ggf. eine andere Messwertkampagne erstellt, als für einen Kunden der Service z nutzen möchte. Ändert der Kunde seinen Consent,
kann die Messwertkampagne in manchen Ausführungsbeispielen dynamisch angepasst werden.

In einigen Ausführungsbeispielen kann sich durch die Verknüpfung von Fahrzeugvarianten und Kundenanforderungen eine Vielzahl von individuellen Messwertkampagnen ergeben, die dynamisch für eine hohe Vielzahl von Fahrzeugen und Kunden erstellt werden. Ausführungsbeispiele können genau diese dynamische Erstellung von Messwertkampagnen ermöglichen.

Ausführungsbeispiele können dabei unterschiedliche Consent- Einwilligungen von Benutzern unterscheiden. Im Allgemeinen können die Kunden/Benutzer auch eine Einwilligung zu allen Daten geben und keine individuellen Messwert-Gruppen und zugehörige Use-Cases nutzen. Zumindest manche Ausführungsbeispiele schaffen eine Kombination aus erweiterten Diagnoseabfragen, die über den OBDII-Standard hinausgehen, mit einer feingranularen Möglichkeit kunden-/benutzerspezifisch zu steuern.

Insofern kann das Verfahren 20 ferner ein Registrieren für den angefragten Dienst umfassen. Dabei kann ein erstes Freigeben zur Übermittlung der Fahrzeugdaten bei dem Registrieren umfasst sein und ein zweites Freigeben zur Übermittlung der Fahrzeugdaten bei der Dienstanfrage.

In Folgenden werden einige Ausführungsbeispiele in weiterem Details beschrieben.

In einem weiteren Ausführungsbeispiel wird ein sogenannter PDU-Modus (Von Packet Data Unit, Paketdateneinheit) in/an einem Fahrzeug implementiert. Ziel des PDU Modes ist es auf alle Diagnose-Informationen im Fahrzeug zuzugreifen, diese zu interpretieren und anderen Mehrwertdiensten bereitzustellen. Hierdurch soll ein vollständiges ECO-System zum Auslesen von Fahrzeugdaten geschaffen werden, welches dem Kunden/Benutzer die volle Kontrolle über seine Daten ermöglicht (Consent Framework) und gleichzeitig die Erstellung von Services für den Kunden auf Basis dieser Daten ermöglicht. Letzteres wird durch die Einbindung einer 3rd Party API (von Application Programing Interface, Applikationsprogrammierungsschnittstelle) in das ECO-System gewährleistet.

Im Folgenden ist detailliert beschrieben, wie dieses ECO-System in einem Ausführungsbeispiel funktioniert und aufgebaut ist. Der Fokus liegt hierbei auf der Diagnose-Funktionalität, welche besonders detailliert beschrieben wird.

In dem nun beschriebenen Ausführungsbeispiel wird ein DataPlug (Datenstecker) Funktionalität verwendet, um die Schnittstelle zum Fahrzeug zu realisieren. Beim DataPlug 2.0 handelt sich um einen Adapter, welcher auf die OBD2-Schnittstelle im Fahrzeug 500 gesteckt wird. Dort liest er Fahrzeugzustandsdaten aus und sendet diese per Bluetooth an ein Smartphone 100. Im Rahmen des Entwicklungsprojektes "DataPlug 2.0" wurde die Firmware eines früheren DataPlugs der ersten Generation (DataPlug 1.0) erweitert. Zum einen wurde hierdurch die Kommunikation zwischen Smartphone 100 und DataPlug gegen Abhörversuche abgesichert (Security Maßnahmen), zum anderen wurde die Diagnosefunktionalität erweitert, um weitere Daten aus dem Fahrzeug 500 auslesen zu können.

Allgemein sind ODX-Informationen notwendig, um Daten über Diagnose aus dem Fahrzeug 500 auslesen zu können. Die Logik zum Auslesen von Diagnose-Messwerten lässt sich folgendermaßen beschreiben:
MW_Abfrage (Bspw. lese Geschw.) -> ODX-Daten -> Diagnose-Befehl an Fahrzeug 500 MW_Ergebnisse (Bspw. v=10Kkm/h) <- ODX-Daten <- Diagnose Antwort vom Fahrzeug 500

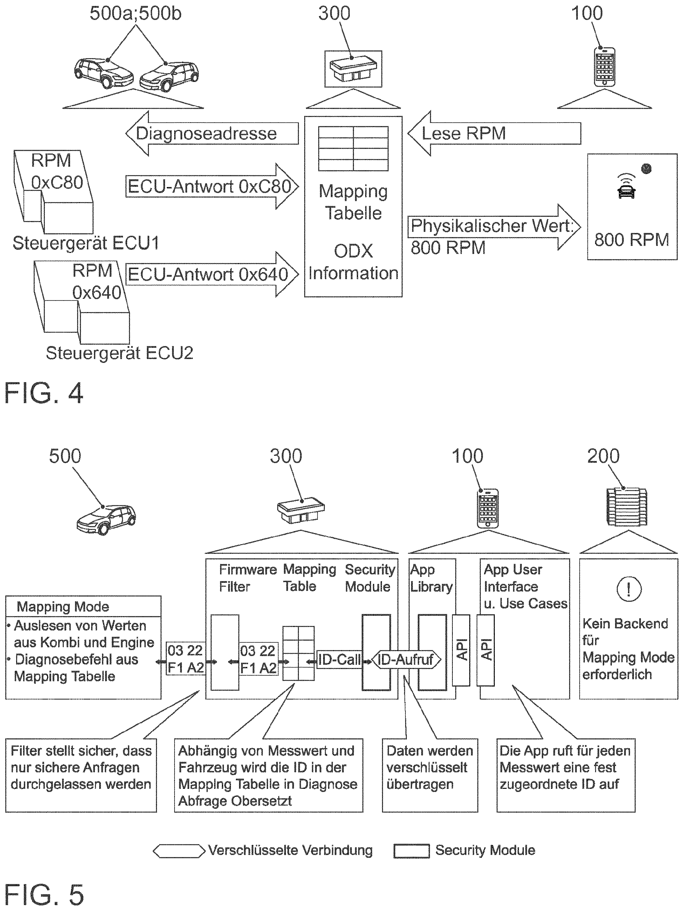

Zum einen werden ODX Daten benötigt, um den Diagnose-Befehl für eine bestimmte Fahrzeuginformation zu erhalten. Zum anderen enthalten die ODX-Daten Informationen, wie die Antwort vom Fahrzeug 500 interpretiert werden muss. Dieses Prinzip ist exemplarisch in der nachfolgenden Fig. 4 am Beispiel von zwei unterschiedlichen Motor-Steuergeräten dargestellt.

Fig. 4 zeigt eine Konzeptübersicht zu ODX-Daten in einem Ausführungsbeispiel. Die Fig. 4 zeigt links zwei verschiedene Fahrzeuge 500a, 550b, in der Mitte einen DataPlug 300 und rechts ein Endgerät (Smartphone) 100. In diesem Ausführungsbeispiel wird vom Endgerät 100 aus eine Drehzahl (RPM von Revolutions Per Minute) ausgelesen. Der DataPlug 300 beinhaltet eine Abbildungstabelle (Mappingtable), die aus den Instruktionen des Endgerätes 100 in Abhängigkeit des Fahrzeugs 500a, 500b die jeweilige ODX-Information herausliest. Zum Beispiel kann aus der Tabelle die entsprechende Diagnoseadresse für verschiedene Steuergeräte ECU 1, ECU 2 herausgelesen werden, sodass die Drehzahlen bei den Fahrzeugen 500a, 500b gelesen werden können, und die beiden Steuergeräte entsprechend antworten. Die Abbildungstabelle implementiert somit die Komplexität des DataPlugs 300. Darüber hinaus können die von den Steuergeräten bereitgestellten Diagnosedaten von der Identifikation bzw. Adressierung des jeweiligen Steuergerätes abhängen. In manchen Ausführungsbeispielen kann es für jede Version eines Fahrzeugs 500 oder eine Kombination von Steuergeräten eine eigene Abbildungstabelle geben. Der DataPlug 300 gibt dann im in der Fig. 4 gezeigten Ausführungsbeispiel den physikalischen Wert "800 Umdrehungen" zurück.

Um Diagnoseinformationen aus dem Fahrzeug auszulesen, wurden beim DataPlug 2.0 zwei Funktionen implementiert, die sich hinsichtlich der Nutzung von ODX-Daten unterscheiden. Diese beiden Funktionen, Mapping Mode und PDU Mode werden im Folgenden näher beschrieben.

In einem ersten Ausführungsbeispiel wird der Abbildungstabellenmodus verwendet. Bei diesem Modus sind die ODX-Daten innerhalb des DataPlugs 300 hinterlegt (Mapping Tabelle). D.h. das Smartphone 100 erhält alle Daten im Klartext und bereits interpretiert. Dieses ist schematisch in der Fig. 5 dargestellt. Fig. 5 illustriert das Prinzip einer Abbildungstabelle in einem Ausführungsbeispiel. Fig. 5 zeigt von links nach rechts ein Fahrzeug 500, den DataPlug 300, das Endgerät 100 und eine Netzwerkkomponente/Backend 200, die jedoch für den Abbildungsmodus in diesem Ausführungsbeispiel nicht erforderlich ist. In dem DataPlug 300 befinden sich in diesem Ausführungsbeispiel ein Firmware Filter, der sicher stellt, dass nur sichere Anfragen durchgelassen werden, die Abbildungstabelle (Mapping Table), die abhängig von Messwert und Fahrzeug die ID (Identifikation) in der Abbildungstabelle in eine Diagnoseabfrage übersetzt, und ein Sicherheitsmodul (Security Module), das mit einem weiteren Sicherheitsmodul (Security Module), welches in dem Endgerät 100 implementiert ist, eine verschlüsselte Verbindung aufbaut. Das Endgerät umfasst ferner eine Applikations-Bibliothek (App Library) sowie zumindest eine entsprechende Benutzerschnittstelle. Somit kann die Applikation (App) auf dem Endgerät 100 für jeden Messwert eine fest zugeordnete ID aufrufen. Alle Daten, die über den DataPlug 300 ausgelesen werden, werden vorher in der Mapping Tabelle definiert.

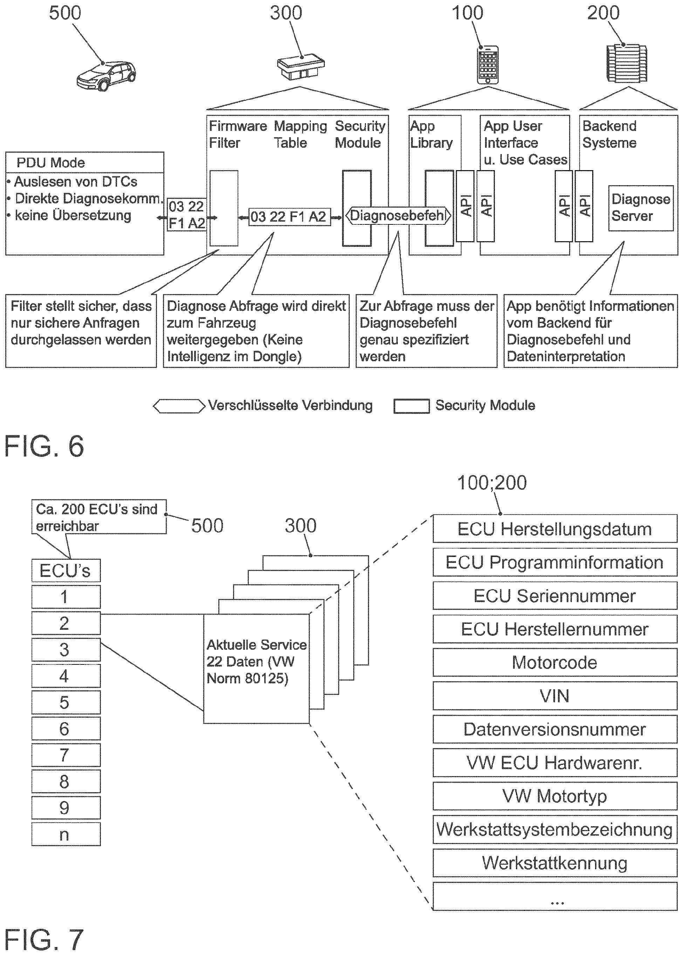

In einem zweiten Ausführungsbeispiel wird ein PDU-Modus (Packed Data Unit, Paketdateneinheit) verwendet. Der Speicher und damit auch die Möglichkeit ODX-Daten im DataPlug 300 zu hinterlegen sind begrenzt. Aus diesem Grund wurde ein zweiter Modus zum Auslesen von Daten eingeführt. Bei diesem sogenannten PDU-Modus wird keine Mapping Tabelle im DataPlug 300 genutzt. Stattdessen erfolgt die Interpretation der Daten im Backend/ bei der Netzwerkkomponente 200 ("Die Mapping Tabelle wird ins Backend verlagert"). Dieses Prinzip ist in der Fig. 6 dargestellt. Fig. 6 zeigt eine schematische Darstellung eines "PDU"-Modus in einem Ausführungsbeispiel. Fig. 6 zeigt, wie die Fig. 5, von links nach rechts ein Fahrzeug 500, den DataPlug 300, das Endgerät 100 und eine Netzwerkkomponente/Backend 200. In dem DataPlug 300 befinden sich in diesem Ausführungsbeispiel ein Firmware Filter, der sicherstellt, dass nur sichere Anfragen durchgelassen werden. Die Diagnoseabfrage wird hier direkt zum Fahrzeug 500 weitergegeben (keine Intelligenz im DataPlug300/Dongle). Ein Sicherheitsmodul (Security Module), das mit einem weiteren Sicherheitsmodul (Security Module), welches in dem Endgerät 100 implementiert ist, eine verschlüsselte Verbindung aufbaut, erlaubt hier das verschlüsselte/sichere übertragen von Diagnosebefehlen, wobei ein Diagnosebefehl zur Abfrage genau spezifiziert wird. Applikationsschnittstellen beim Endgerät 100 und der Netzwerkkomponente 200 erlauben den Austausch von Informationen über Diagnosebefehle und Dateninterpretation.

In dem PDU-Modus kann die Smartphone App den gesamten Diagnosebefehl an den DataPlug 300 senden, um eine bestimmte Information auszulesen. Darüber hinaus erhält die App in diesem Ausführungsbeispiel lediglich die Rohdaten vom DataPlug 300, welche weiterhin über ODX-Daten ausgewertet werden müssen, um interpretierte Daten zu erhalten. Diese Funktion erhöht somit die Komplexität auf Smartphone-Seite 100. Andererseits wird durch eine Verlagerung der Mapping Tabelle ins Backend 200 deutlich mehr Flexibilität gewonnen. Auf diesem Weg kann auf alle Steuergeräte im Fahrzeug 500 zugegriffen werden. Hierdurch entsteht die Möglichkeit Messwerte auszulesen, welche nicht in der Mapping Tabelle enthalten sind. Dazu gehören auch Fehlerspeichereinträge (DTCs von Digital Trouble Code) aus allen Steuergeräten im Fahrzeug 500.

Fig. 7 zeigt eine Darstellung der über den "PDU"-Modus auslesbaren Informationen von einem Fahrzeug. Fig. 7 zeigt links eine Anzahl von ansprechbaren Steuergeräten (ECU von Electronic Control Unit) in einem Fahrzeug 500, z.B. n. In der Mitte ist ein DataPlug 300 gezeigt, der beispielsweise 22 verschiedene Datensätze von den ECUs erhalten kann. Auf der linken Seite der Fig. 7 sind die auswertbaren (in dem Endgerät 100 oder der Netzwerkkomponente 200) Informationen dargestellt, z.B. ECU Herstellungsdatum, ECU Programminformation, ECU Seriennummer, ECU Herstellernummer, Motor-Kenn-Buchstaben, Fahrzeugidentifikationsnummer (VIN von Vehicle Identification Number), Datensatzversion, ECU Hardwarenummer, Motortyp, Werkstattsystembezeichnung, Werkstattkennung, etc.

Wenn in Ausführungsbeispielen erst ein Steuergerät bekannt ist, kann ein Erstellen der Datenanfrage basierend auf einer Kennung des zumindest einen Steuergerätes und einer Zugangsschnittstelle des Fahrzeugs erfolgen. Die Datenanfrage kann Informationen über eine Instruktion oder einen Eingangsparameter für eine Tabelle mit verschiedenen Instruktionen an das zumindest eine Steuergerät umfassen. In einigen weiteren Ausführungsbeispielen kann ferner ein Abfragen vorhandener Steuergeräte in dem Fahrzeug 500 erfolgen.

Im folgenden Ausführungsbeispiel wird beschrieben wie die im DataPlug 300 verfügbare PDU Modus-Funktion auf App- und Backend Seite genutzt werden kann. Hierbei soll zunächst das allgemeine Prinzip zum Zusammenspiel von DataPlug 300, App und Backend 200 beschrieben werden. Darauf aufbauend konzentriert sich der nachfolgende Abschnitt auf die detaillierte Beschreibung der Backend Funktionalität zur Erstellung von Messaufträgen und der Interpretation der Diagnose-Antworten (Roh-Daten). Abschließend wird die gesamte Backend Architektur inklusive des Consent-Frameworks (Einverständnis-Rahmenwerk), welches beschreibt wie die Zustimmung des Kunden/Benutzers 600 zum Auslesen von Daten erfolgt, präsentiert.

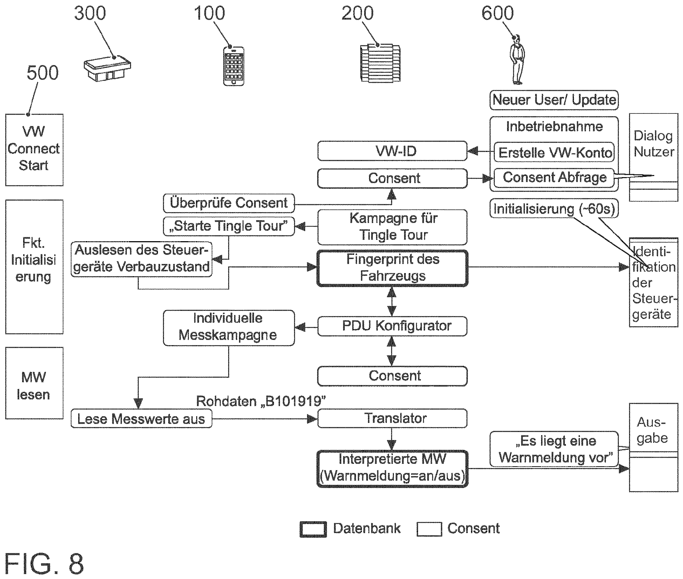

Die nachfolgende Fig. 8 zeigt das Zusammenspiel von DataPlug 300, Smartphone 100 und Backend 200 zur Nutzung des PDU Modus in einem Ausführungsbeispiel. Dabei legt zunächst ein Benutzer 600 einen neuen Benutzer im Rahmen eines Benutzerkontos/BenutzerID bei der Netzwerkkomponente 200 an. Dabei wird der Consent (Einverständnis) zur Datenverarbeitung von dem Benutzer abgefragt. Anschließend wird davon ausgegangen, dass die Netzwerkkomponente eine Messwertkampagne "Tingle Tour" auslöst und über das Smartphone 100 und den DataPlug 300 auf die Fahrzeugdaten zugreift. Dabei wird zunächst ein Fingerabdruck des Fahrzeugs 500 zurückgeliefert, beispielsweise eine Liste aller in dem Fahrzeug verfügbaren Steuergeräte. Daraufhin kann die Netzwerkkomponente 200 eine Initialisierung durchführen (beispielsweise basierend auf vordefinierten Informationen über die jeweiligen Steuergeräte, Dauer z.B. 60s) und eine entsprechende PDU konfigurieren sowie über das Benutzerendgerät eine individuelle Messkampagne starten. Die Messwerte werden dann ausgelesen und ggf. einem Datenumsetzer/-übersetzer (Translator) zugeführt, der die Messwerte entsprechend interpretieren kann. Darauf aufbauend kann dann beispielsweise eine Warnung ausgegeben oder generiert werden.

Im Allgemeinen können folgende Funktion in dem PDU Modus ausgeführt werden:
1. Identifikation der Steuergeräte, die im Fahrzeug 500 verbaut sind, vgl. Fig. 8, z.B. Auslesen Verbauzustand zu VIN.
2. Diese Informationen, im folgenden "Fingerprint" genannt, können im Backend 200 gespeichert werden, damit klar ist, welche ODX-Daten für dieses Fahrzeug 500 genutzt werden können.
3. Mit den Informationen aus dem Fingerprint des Fahrzeugs 500 und den zugehörigen ODX-Daten wird im Backend 200 ein Konfigurations-File erstellt und an das Smartphone 100 gesendet. Dieses Konfigurations-File enthält die Diagnose-Befehle zu allen Daten, die der Kunde 600 aus seinem Fahrzeug 500 auslesen möchte. Jedes Mal, wenn der Kunde 600 andere Daten aus dem Fahrzeug 500 auslesen möchte, wird ein neues Konfigurations-File erstellt und an das Smartphone 100 des Kunden 600 gesendet.
4. Auf dem Smartphone (Client) 100 werden die Diagnose-Informationen entsprechend des Konfigurations-Files aus dem Auto 500 ausgelesen und als Roh-Daten an das Backend 200 gesendet.
5. Im Backend 200 erfolgt die Interpretation der Roh-Daten auf Basis der ODX-Informationen. Nach diesem Schritt stehen die interpretierten Daten im Backend 200 bereit und können wiederum vom Smartphone 100 abgerufen werden.

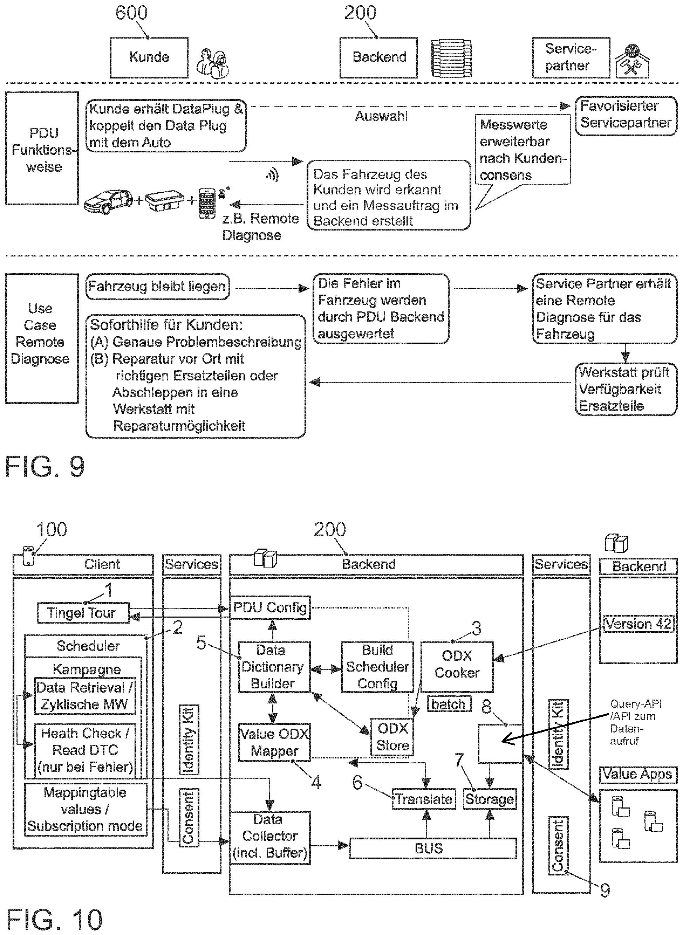

Entsprechend des in Fig. 8 beschriebenen Ablaufs lassen sich auch Fehlerspeichereinträge aus dem Fahrzeug auslesen, welche im Backend 200 interpretiert werden können. Fig. 9 zeigt beispielhaft den Use-Case "Health Check", welche sich über den PDU Mode realisieren lässt. Fig. 9 zeigt eine Übersicht eines Ablaufs bei einer Funktionsüberprüfung eines Fahrzeugs 500 in einem Ausführungsbeispiel. Die Fig. 9 zeigt oben das Ausführungsbeispiel zur Funktionsüberprüfung bei dem der Kunde 600 einen DataPlug 300 erhält und diesen mit dem Fahrzeug 500 koppelt. Dies ermöglicht Messwerte auszulesen und aus der Ferne Auswertungen vorzunehmen. Entsprechende Messaufträge können im Backend 200 erstellt werden, wobei diese jeweils vom Kundeneinverständnis abhängen. Die Fig. 9 zeigt unten ein Ausführungsbeispiel bei dem ein Fahrzeug 500 liegen bleibt. Entsprechende Messwerte oder Fehlermeldungen können aus der Ferne ausgelesen und beispielsweise durch ein PDU Backend 200 ausgewertet werden. Ein entsprechender Service-Partner kann dann eine Diagnose durchführen und ggf. in einer Werkstatt prüfen, ob entsprechende Ersatzteile verfügbar sind. Dem Kunden 600 kann dann eine genaue Problembeschreibung und/oder eine Reparatur vor Ort mit richtigen Ersatzteilen oder ein Abschleppen in eine Werkstatt mit Reparaturmöglichkeit angeboten werden. Ausführungsbeispiele können so einen Dienst mit sofortiger oder zumindest zeitnaher Remote (Fern-) Diagnose durch das Auslesen und die Interpretation von Fehlerspeichereinträgen ermöglichen. Weitere Messwerte können durch Aktualisierung der PDU-Messaufträge nach Kunden-Einverständnis bereitgestellt werden.

Fig. 10 zeigt einen Diagnoseteil in einem Backend in einem Ausführungsbeispiel. Fig. 10 illustriert detaillierter, wie die Erstellung eines Konfigurations-Files und die Interpretation der Diagnose-Daten im Backend 200 in einem Ausführungsbeispiel erfolgen kann. Fig. 10 zeigt den Aufbau der hierzu involvierten Backend Komponenten 200 im Zusammenspiel mit einem Client, der auf dem Endgerät 100 eines Benutzers implementiert ist. Die einzelnen Komponenten werden nachfolgend tabellarisch beschrieben:

| BZZ | **Thema** | **Input** | **Output** |
|---|---|---|---|
| 1 | Tingle Tour | Abfrage der Identifier aller Steuergeräte im Fahrzeug über die mit dem DataPlug verbundene App, Kommunikation mit der entsprechenden Schnittstelle im Backend (PDU Config) in Fig. 10 | • Identifier aller Steuergeräte im Fahrzeug (ASAM_Keys), im folgenden "Fingerprint des Fahrzeugs" genannt |
| 2 | Scheduler | Erhält eine Messkampagne aus dem Backend, dabei werden beispielsweise zyklisch Messwerte/Daten ausgelesen, auch können hier Fehlercodes (DTC) ausgelesen werden und ggf. eine Überprüfung durchgeführt werden. Im Client 100 kann darüber hinaus eine Abbildungs-tabelle mit Werten vorhanden sein, die die Registrierung für einen Dienst unterstützt (mit Identifizierung und Einverständnis des Nutzers (Consent). Die Daten können im Backend 200 einem Datenspeicher oder Puffer zur Verfügung gestellt werden. | • PDU Antworten |
| 3 | Import PDX Files ("ODX Cooker") | PDX-Dateien; diese enthalten einer Liste aller theoretisch möglich verbaubaren Steuergeräte für alle Fahrzeugmodelle und einem Regelwerk wie diese anzusprechen und die Antworten zu interpretieren sind (Protokolle). Dabei kann zusätzlich ein entsprechender ODX-Speicher (ODX-Store) vorhanden sein. | • Liste aller ASAM_Keys und korrespondierender ODX Daten. |
| 4 | Translator File ("Value ODX Mapper") (beschreibt wo die PDU-Informationen innerhalb der ODX-Daten zu finden sind für einen spezifischen Messwert) | • Klartextname des Messwerts | |
| | | • Alle ASAM_Keys / ECU Versionen bei denen dieser Messwert gelesen werden kann | |
| | | • Short_Name (+ weitere Informationen) die beschreiben wo genau die "PDU_Request + PDU_Interpretation" Informationen innerhalb der ODX-Daten zu finden sind | |
| 5a | Service "DataDictionary Builder" (Suche in den ODX - Daten nach relevanten PDU_Request und PDU_Interpretations-informationen; Ergebnisse werden im "Data Dictionary" gespeichert) Kann mit einem Scheduler (Resourcenzuteiler) zusammenarbeiten (Build Scheduler Config in Fig. 10) | • Short_Name | |
| | | • ASAM_Key | |
| | | • PDU_Request (Comparams, Message) | |
| | | • PDU_Response + Logik um die Ergebnisse zu interpretieren (relevant Bytes, Einheiten, Formeln) | |
| 5b | Data Dictionary, Datenverzeichnis | § DTC Response: | § Text_ID |
| | | § Bsp.: 59x02 FF 0010 25 2F | Short_Name |
| | | § ASAM_File_Version | § Developer Text (nicht für Kunde) |
| | | § ASAM_File_Identifier | |
| 6 | Translate | Rohdaten der PDU-Response als Bytestream | Interpretierte Daten |
| 7 | Storage | • Interpretierte Daten | Daten werden gespeichert |
| 8 | Query API | API um die Daten aus dem Speicher zu lesen | 3^{rd} Party Konsumenten sind in der Lage auf die Daten zuzugreifen (abhängig vom Consent/der Zustimmung des Kunden) |
| 9 | Consent | UserId | ConsentScopes denen der User, mit dieser Userld, zugestimmt hat |

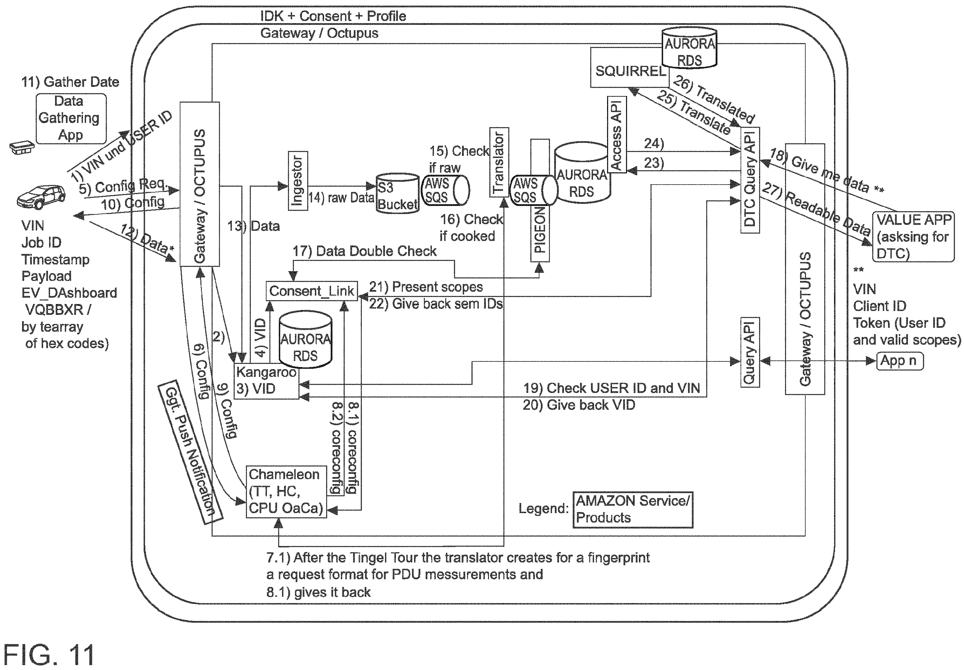

Fig. 11 zeigt eine Netzarchitektur inklusive Zustimmungseinholung vom Benutzer in einem weiteren Ausführungsbeispiel. In diesem Ausführungsbeispiel wurde das gesamte Backend Framework wurde mit dem Ziel aufgebaut die PDU Mode Diagnose-Daten anderen Mehrwertdiensten über eine 3rd Party API bereitzustellen und dem Kunden hierbei die volle Kontrolle über seine Daten zu ermöglichen. Fig. 11 zeigt die gesamte Backend Architektur. Die zuvor beschriebenen Komponenten zur Verarbeitung der Diagnose-Daten finden sich in den Komponenten "Configuration" und "Translator" wieder. Darüber hinaus sind zusätzliche Komponenten für das Consent Handling und die 3rd Party API dargestellt, die in der nachfolgenden Tabelle knapp beschrieben sind.

| Name | Input | Output | Description |
|---|---|---|---|
| Kangaroo | VIN, User-ID | VID (Vehicle Identification) | Kangaroo speichert die VIN und die UserlD. Dies ist die einzige Komponente die die Relation zwischen UserID, VIN und VID kennt. Es ist hier nicht möglich ohne Nutzung der Komponente Kangaroo an die einer VID zugehörigen UserID zu kommen. |
| Configuration | Consent, Fingerprint (Asam File und Version), ODX Information, (Translator File) | Konfigurationsdatei für Tingle Tour, Health Check und PDU Data | Die Konfigurationskomponente erstellt eine fahrzeugspezifische Konfiguration um den HealthCheck oder die Abfrage spezifischer PDU-Messwerte zu unterstützen, abhängig vom konkreten Verbauzustand (ermittelt aus dem Fingerprint) des Fahrzeugs. |
| PIGEON | Datenstrom an übersetzten Daten aus dem Fahrzeug. | Datenstrom reduziert um die Werte die nicht vom User freigegeben wurden | Die Steuergeräte aus dem Fahrzeug antworten in vielen Fällen mit mehr Informationen als angefragt, und als vom User freigegeben wurde. Diese werden sofort aus dem Datenstrom entfernt sobald dieser interpretiert wurde. |
| Squirrel | Sprache, DTC-Code | Klartext der DTCs | DTCs sind nicht in jeder Sprache verfügbar. Abhängig von den Spracheinstellungen der Mehrwert-App wird die notwendige Übersetzung geliefert. |

Weitere Ausführungsbeispiele sind Computerprogramme zur Durchführung eines der hierin beschriebenen Verfahren, wenn das Computerprogramm auf einem Computer, einem Prozessor, oder einer programmierbaren Hardwarekomponente abläuft. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 1: Tingle Tour
- 2: Scheduler
- 3: ODX Cooker
- 4: Translator file
- 5: Data Dictionary Builder
- 6: Translate
- 7: Storage
- 8: Query API
- 9: Consent
- 10: Verfahren für eine Netzwerkkomponente
- 11: Empfangen einer Datenanfrage zur Bereitstellung der Informationen von einem Benutzer
- 12: Überprüfen einer Freigabe zur Datenübermittlung von Fahrzeugdaten durch den Benutzer
- 13: Senden einer Datenanfrage an zumindest ein Steuergerät des Fahrzeugs, wenn die Freigabe durch den Benutzer vorliegt
- 14: Empfangen der Fahrzeugdaten von dem Fahrzeug
- 15: Bereitstellen der auf den Fahrzeugdaten aus dem Fahrzeug basierenden Informationen
- 20: Verfahren für Endgerät
- 21: Erhalten einer Dienstanfrage durch den Benutzer, wobei ein mit der Dienstanfrage angefragter Dienst auf den Fahrzeugdaten basiert
- 22: Senden der Dienstanfrage an eine Netzwerkkomponente
- 23: Freigeben einer Datenübermittlung der Fahrzeugdaten von dem Fahrzeug an die Netzwerkkomponente
- 24: Erhalten der auf den Fahrzeugdaten basierenden Information von der Netzwerkkomponente
- 100: Endgerät
- 200: Netzwerkkomponente
- 300: DataPlug
- 400: System
- 500: Fahrzeug
- 600: Benutzer

## Patentansprüche

1. Verfahren (10) für eine Netzwerkkomponente (200) zur Bereitstellung von auf Fahrzeugdaten aus einen Fahrzeug (500) basierenden Informationen, mit:
Empfangen (11) einer Datenanfrage zur Bereitstellung der Informationen von einem Benutzer;
Überprüfen (12) einer Freigabe zur Datenübermittlung von Fahrzeugdaten durch den Benutzer;
Senden (13) einer Datenanfrage an zumindest ein Steuergerät des Fahrzeugs (500), wenn die Freigabe durch den Benutzer vorliegt;
Empfangen (14) der Fahrzeugdaten von dem Fahrzeug (500); und
Bereitstellen (15) der auf den Fahrzeugdaten aus dem Fahrzeug (500) basierenden Informationen,
wobei das Verfahren (10) ferner ein Abfragen vorhandener Steuergeräte in dem Fahrzeug (500) umfasst.

2. Verfahren (10) gemäß Anspruch 1, wobei das Senden (13) der Datenanfrage an das zumindest eine Steuergerät des Fahrzeugs (500) über eine Diagnoseschnittstelle des Fahrzeugs (500) erfolgt.

3. Verfahren (10) gemäß einem der Ansprüche 1 oder 2, wobei das Senden (13) der Datenanfrage an das zumindest eine Steuergerät des Fahrzeugs (500) an ein Endgerät (100) des Benutzers (600) und vom Endgerät (100) des Benutzers (600) an das Fahrzeug (500) erfolgt.

4. Verfahren (10) gemäß Anspruch 3, das ferner ein Autorisieren eines Endgerätes (100) des Benutzers (600) umfasst.

5. Verfahren (10) gemäß einem der vorangehenden Ansprüche, das ferner ein Erstellen der Datenanfrage basierend auf einer Kennung des zumindest einen Steuergerätes und einer Zugangsschnittstelle des Fahrzeugs (500) umfasst.

6. Verfahren (10) gemäß Anspruch 5, wobei die Datenanfrage Informationen über eine Instruktion oder einen Eingangsparameter für eine Tabelle mit verschiedenen Instruktionen an das zumindest eine Steuergerät umfasst.

7. Verfahren (20) für ein Endgerät (100) eines Benutzers (600) zur Übermittlung von auf Fahrzeugdaten aus einem Fahrzeug (500) basierenden Informationen, mit
Erhalten (21) einer Dienstanfrage durch den Benutzer (600), wobei ein mit der Dienstanfrage angefragter Dienst auf den Fahrzeugdaten basiert;
Senden (22) der Dienstanfrage an eine Netzwerkkomponente (200);
Freigeben (23) einer Datenübermittlung der Fahrzeugdaten von dem Fahrzeug (500) an die Netzwerkkomponente (200); und
Erhalten der (24) auf den Fahrzeugdaten basierenden Information von der Netzwerkkomponente (200),
ferner umfassend Erhalten einer Abfrage vorhandener Steuergeräte in dem Fahrzeug (500) von der Netzwerkkomponente (200) und Senden der Abfrage an das Fahrzeug (500).

8. Verfahren (20) gemäß Anspruch 7, ferner umfassend Erhalten einer Anfrage nach den Fahrzeugdaten von der Netzwerkkomponente (200) und Senden der Anfrage an zumindest ein Steuergerät des Fahrzeugs (500).

9. Verfahren (20) gemäß Anspruch 8, ferner umfassend Erhalten der Fahrzeugdaten von dem zumindest einen Steuergerät des Fahrzeugs (500) und Senden der Fahrzeugdaten an die Netzwerkkomponente (200).

10. Verfahren (20) gemäß einem der Ansprüche 7 bis 9, das ferner ein Registrieren für den angefragten Dienst umfasst.

11. Verfahren (20) gemäß Anspruch 10, das ein erstes Freigeben zur Übermittlung der Fahrzeugdaten bei dem Registrieren umfasst und ein zweites Freigeben zur Übermittlung der Fahrzeugdaten bei der Dienstanfrage.

12. Computerprogramm zur Durchführung eines der Verfahren (10; 20) nach einem der Ansprüche 1 bis 11, wenn das Computerprogramm auf einem Computer, einem Prozessor, oder einer programmierbaren Hardwarekomponente abläuft.

13. Vorrichtung (30) für eine Netzwerkkomponente (100), die ausgebildet ist, um eines der Verfahren (10) der Ansprüche 1 bis 6 durchzuführen.

14. Vorrichtung (40) für ein Endgerät (200) eines Benutzers, die ausgebildet ist, um eines der Verfahren (20) der Ansprüche 7 bis 11 durchzuführen.
